# EUROPÄISCHE PATENTSCHRIFT

(11) **EP 1 521 631 B1**
(45) Veröffentlichungstag und Bekanntmachung des Hinweises auf die Patenterteilung: **27.07.2011**
(21) Anmeldenummer: 03732468.8
(22) Anmeldetag: 26.05.2003
(51) Int. Cl.: B01J 19/00

(54) **VERFAHREN ZUM MISCHUNGSFREIEN ÜBERTRAGEN VON HETEROGENEN FLÜSSIGKEITEN IN MIKROKANÄLEN**
METHOD FOR TRANSFERRING HETEROGENEOUS LIQUIDS IN MICROCHANNELS WITHOUT THE OCCURRENCE OF MIXING
PROCEDE DE TRANSFERT SANS MELANGE DE LIQUIDES HETEROGENES DANS DES MICROCANAUX

(30) Priorität: 24.05.2002 DE 10223137
(43) Veröffentlichungstag der Anmeldung: 13.04.2005
(73) Patentinhaber: Fraunhofer-Gesellschaft zur Förderung der angewandten Forschung e.V., 80686 München (DE)
(72) Erfinder: WAGLER, Patrick, 56154 Boppard (DE); MCCASKILL, John, Simpson, 53229 Bonn (DE); FOSTER, Tobias, 50939 Köln (DE)
(74) Vertreter: von Kreisler Selting Werner
(86) Internationale Anmeldenummer: PCT/EP2003/005501
(87) Internationale Veröffentlichungsnummer: WO 2003/099407

(56) Entgegenhaltungen:
- EP-A- 0 815 940
- WO-A-01/12327
- WO-A-99/25475
- US-A- 4 028 056
- US-A- 4 399 102

## Beschreibung

Die Erfindung betrifft ein Verfahren zum mischungsfreien Übertragen von heterogenen Flüssigkeiten in Mikrokanälen. Insbesondere betrifft die Erfindung den mischungsfreien Transport einer heterogenen Flüssigkeit zwischen zwei Orten in einem Kanalsystem.

### Technisches Anwendungsgebiet

Heterogene Flüssigkeiten, d.h. Flüssigkeiten, die Konzentrationsgradienten von Molekülen oder Mikropartikel (z.B. Beads) enthalten, werden in einer Vielfalt von synthetischen und analytischen Aufgaben in der Chemie gebildet. Vor allem in Verbindung mit Flussreaktoren oder Trennverfahren wie Chromatographie und Gel-Elektrophorese (PAGE) in der Biotechnologie, aber auch in der kombinatorischen Chemie oder in "Lab on a Chip"-Anwendungen, müssen heterogene Lösungen mischungsfrei von ihrem Entstehungsort zum Ort ihrer Weiterverarbeitung (z. B. Analyse, Fraktionierung oder anderer Verarbeitungsschritte) weitergeleitet werden.

### Stand der Technik

Die bei konventionellen Analyseverfahren wie Chromatographie oder Elektrophorese erzeugten heterogen fraktionierten Lösungen leiden beim Transport innerhalb von Kapillarsystemen unter einer starken Längsvermischung, die deren Auflösung stark verringert. Der Grund dafür ist die Ausbildung des bekannten parabolischen Geschwindigkeitsprofils, welches bewirkt, dass sich die Strömung in der Mitte des Kanals bzw. der Kapillare schneller als am Rand bewegt. In der Folge verursacht eine laterale Diffusion über kurzer Entfernungen in der Strömung die Längsmischung (G. Taylor Convektion Ref "Dispersion of soluble matter in solvent flowing slowly through a tube" Proc. Roy. Soc. London 219A (1953) 186-203). Eine Verkleinerung des Rohrdurchmessers verringert zwar die Gesamtdurchmischung, erhöht jedoch den hydrodynamischen Widerstand und verursacht größere Probleme durch Wandeffekte und Adsorption. Neuere Forschungen zeigen, dass eine gezielte Lateralmischung, die durch mikrastrukturierte Komponenten hervorgerufen wird, diesen Effekt etwas vermindert (Ref M.J.Clifton "Continuous flow electrophoresis in the Taylor regime." J.Chromatography A 757 (1997) 193-202). Diese sogenannte "Taylor-Dispersion" und die Wandadsorption bleibt jedoch für eine stetige einphasige Probenführung in Kapillaren limitierend.

Aus WO-A-01/12327 ist ein Verfahren zum Bilden und Übertragen einer Anzahl kleinvolumiger Segmente eines Materials auf einem fluidischen Mikrochip bekannt, bei dem ein erster Kanal einen Eingang, der mit einer Quelle von Transportfluiden verbunden ist, und einen Ausgang aufweist, der mit einem Fluidreservoir verbunden ist. Ein zweiter Kanal weist einen Eingang, der mit einer Quelle von Trennfluiden verbunden ist, und einen Ausgang auf, der mit dem ersten Kanal verbunden ist. Ein kleines Volumen des Trennfluids wird in den ersten Kanal gesaugt und in dem ersten Kanal zu dem Fluidreservoir übertragen. Die Schritte des Ansaugens und Übertragens des kleinen Volumens des Trennfluids in den ersten Kanal werden wiederholt, um eine Abfolge von Übertragungsfluid-Volumina und/oder Analyse-Volumina zwischen den Trennfluid-Volumina zu bilden.

Spontane Phasentrennungen von miteinander nicht mischbaren Flüssigkeiten sind bekannt (Ref: K.-V. Schubert und E.W. Kaler "Nonionic microemulsions" Ber. Bunsengesellschaft 100 (1996) 190-205). So bilden beispielsweise Öl und Wasser im Gleichgewichtszustand zweiphasige Systeme. Die Erzeugung von Tropfen aus nicht mischbaren Phasen innerhalb von Mikrokanälen ist ebenfalls untersucht worden. Dagegen ist der Einsatz von Tropfen aus nicht mischbaren Phasen für den mischungsfreien Transport von Mikroprobenvolumina bisher nicht beschrieben worden. Des weiteren ist die Steuerung der Bildung von Nicht-Gleichgewichtsphasen durch Oberflächen-, Geometrie- und Fließgeschwindigkeitseffekte noch wenig erforscht (Ref: L.M. Grant und W.A. Ducker "Effect of Substrate Hydrophobicity on Surface-Aggregate Geometry" J. Phys. Chem. B101 (1997) 5337-5345. Oberflächenbeschaffenheiten wie z.B. hydrophobe bzw. hydrophile Eigenschaften werden verwendet, um Tropfen gezielt auf offenen Oberflächen zu positionieren und an definierten Orten zu halten (z.B. in Wasser-Luft Systemen). Die Bildung von Tropfenketten in Luft-Wasser Systemen und Öl-Wasser Systemen ist bekannt (Ref: "Droplet formation in a microchannel network" Takasi Nisisako, Toru Torii, Toshiro Higuchi Lab on a Chip, Vol. 2, No. 1 (2002) und "Dynamic Pattern Formation in a Vesicle-Generating Microfluidic Device" Todd Thorsen, Richard W. Roberts, Frances H. Arnold and Stephen R. Quake Physical Review Letters, Vol. 86, No, 18 (2001)), aber nicht deren Verwendung in Verbindung mit autonomer Wiederauftrennung der Tropfen zum gezielten Transport von heterogenen Proben, Wasser-Luft-Systeme haben zudem den Nachteil, dass sie unter sich ändernden Druckverhältnissen ausdehnbar und nicht präzise steuerbar sind.

### Mit der Erfindung gelöste Aufgaben

Die Erfindung beschreibt ein Verfahren zur "digitalen" Kodierung und Dekodierung von heterogenen Flüssigkeiten in diskrete Tropfen, ermöglicht durch mischungsfreien Transport innerhalb Kapillaren bzw. Mikrokanälen.

### Lösung

Zur Lösung dieser Aufgabe wird mit der Erfindung ein Verfahren zum mischungsfreien Übertragen einer heterogenen Flüssigkeit, das heißt einer Flüssigkeit, die in Strömungsrichtung betrachtet eine nicht homogene Konzentration aufweist, in Mikrokanläten, wobei das Verfahren mit dem Merkmalen des Anspruch 1 versehen ist.

Nach der Erfindung wird also ein heterogener Flüssigkeitsstrom portioniert, indem zwischen hintereinander liegenden Teilvolumina des heterogenen Flüssigkeitsstroms einzelne Volumina einer zweiten Flüssigkeit, die durchaus homogen sein kann, aber nicht sein muss, eingebracht werden. Während sich die dicht aneinander liegenden Teilvolumina der heterogenen Flüssigkeit ohne diese Maßnahme untereinander vermischen würden, kann nun durch die Trennung der einzelnen Teilvolumina erreicht werden, dass diese Teilvolumina und damit die heterogene Flüssigkeit über weite Strecken transportiert werden können, ohne dass es zu einer Vermischung kommt. Zur Bearbeitung der Teilvolumina der heterogenen Flüssigkeit bedarf es dann wieder einer Separierung des Flüssigkeitsstroms aus alternierend aufeinander folgenden Teilvolumina der beiden Flüssigkeiten, so dass wiederum zwei Ströme entstehen, von denen die eine Strömung gleich der heterogenen Ausgangsflüssigkeit und die andere gleich der zweiten Flüssigkeit ist. Da beide Vorgänge durch Selbstorganisation der Phasen autonom ablaufen können, wird eine Gesamtlösung für den mischungsfreien Transport einer heterogenen Flüssigkeit ohne kostspielige Fraktionatorgeräte ermöglicht.

Die Vereinigung der beiden Flüssigkeitsströme sowie die Auftrennung des Gesamtstromes in die beiden Flüssigkeitsströme erfolgt an Verbindungsstellen, an denen die jeweilige Kanäle zusammentreffen. An diesen Verbindungsstellen können Kammern ausgebildet sein.

Vorteilhafte Ausgestaltungen der Erfindung sind in den Unteransprüchen angegeben.

### Grundzüge des Lösungsweges

Die nachfolgenden Unterpunkte 1 - 3 beschreiben ein Gerät zum mischungsfreien Transport heterogener Flüssigkeiten in Kapillaren oder Mikrokanälen mit charakteristischen Querschnitt-Strukturgrößen (Breite, Tiefe) zwischen 1 µm und 5 mm durch eine autonome "inline" Erzeugung und Wiederauftrennung alternierender Tropfenketten mittels einer zweiten mit der Ausgangslösung nicht mischbaren Flüssigkeit.

### 1. Definierte Tropfenbildung durch kinetische Selbstorganisation und -erzeugung

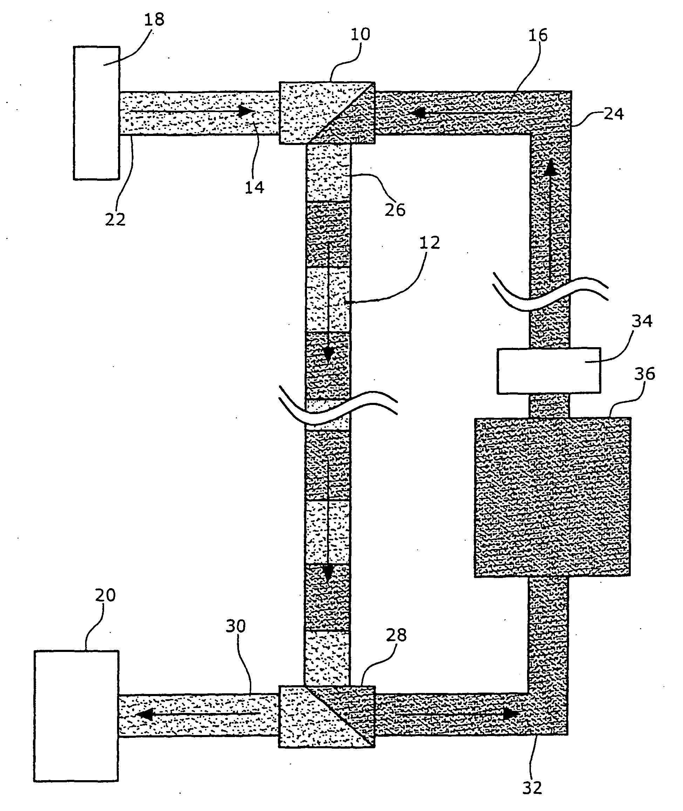

Eine zweite mit der ersten Phase nicht mischbaren und wenig ausdehnbaren Flüssigkeit wird ausgewählt. Die beiden Flüssigkeiten sollten sich bezüglich ihres Kontaktwinkels zur Kanalwand deutlich unterscheiden. Die heterogenen Bestandteile der ersten Flüssigkeit dürfen nicht in der zweiten Phase (Trennflüssigkeit) löslich sein. Für eine wässrige Lösung von Biopolymeren stellen z.B. Öle eine geeignete Wahl dar. Die Bildung alternierender Fluidphasen (wie z.B. Öl-/Lipid- und Wassertropfen) mit oder ohne die Oberflächenspannung beeinflussenden Zusätzen aus zwei oder mehr nicht mischbaren Fluiden im kontinuierlichen Fluss wird an der Begegnungsstelle zweier oder mehrerer sich treffender Kapillaren (Durchmesser: 5-5000 µm) oder Mikrokanalstrukturen (Strukturbreite: 1-5000 µm, Strukturhöhe: 1-5000 µm) gesteuert. Das Prinzip des Verfahrens ist in der Zeichnung dargestellt.

Die Tropfenbildung ist ein kinetischer Vorgang, der zu einem Nicht-Gleichgewichtszustand führt. Die Tropfenlänge (meistens größer als der Kanaldurchmesser) und damit die Tropfenvolumina (fl-µl) sind abhängig vom Volumen der Begegnungskammer bzw. Ihres Begegnungs-, Kreuzungs- bzw. Treffpunkts. Weitere Einflussgrößen sind: die Wahl der zweiten Phase (s.o.), die Geometrie der Begegnungskammer, die Benetzungseigenschaften der Wände/Kapillaroberflächen sowie die Auswahl verschiedener Flussraten. Das Ausführungsbeispiel zeigt detaillierte Werte für zwei verschiedenen Fälle.

### 2. Autonome Auftrennung alternierender Tropfenketten

Die autonome Auftrennung alternierender Fluidphasen (wie z.B. Öl- und Wassertropfen) unter Flussbedingungen wird durch sich teilende Kapillaren (Durchmesser: 5-5000 µm) oder Mikrokanalstrukturen (Strukturbreite: 1-5000 µm, Strukturhöhe: 1-5000 µm) gesteuert. Die unterschiedlichen Benetzungseigenschaften der Flüssigkeiten führen dazu, dass in dem Ableitungskanal mit hydrophilen Oberflächeneigenschaften die wässrige Phase und in dem Ableitungskanal mit hydrophoben Oberflächeneigenschaften die ölige Phase (Trennflüssigkeit) abgeleitet wird. Zusätzlich sollte das Volumen der Trennkammer bezogen auf das Volumen der Tropfen entsprechend klein sein. Die beiden Flüssigkeiten werden dann in den zwei Ableitungskanälen (oder Kapillaren) im Fluss mit derselben Geschwindigkeit wie in Punkt 1 sauber getrennt. Exakte Bedingungen hierfür sind für eine bevorzugte Ausgestaltung der Erfindung im Ausführungsbeispiel angegeben.

### 3. Kombination der Punkte 2 und 1 unter Rückgewinnung der eingesetzten Trennphase

Ein komplettes Transfergerät erfordert den Einsatz eines Reservoirs für die Trennphasenflüssigkeit (z.B. Öl/Lipid) und eine Pumpe um die Flüssigkeit aus diesem Reservoir zu fördern. Um den Verbrauch an eingesetzter Trennphasenflüssigkeit gering zu halten kann die zweite Phase zurückgewonnen werden. Die Trennphase wird mit einem Pumpensystem der Bildungsprozedur (Punkt 1) erneut zugeführt, so dass das System einen geschlossenen Kreislauf bildet.

### Erzeugte Verbesserungen und Vorteile gegenüber Stand der Technik

Der in Tropfen aufgeteilte Transport von heterogenen Molekülproben (insbesondere in der wässrigen Phase), kann ohne eine Durchmischung der

Moleküle (verhindert durch die Trennphase, z.B. Öltropfen) erfolgen, sofern die Moleküle nicht in der zweiten Phase löslich sind. Durch den Einsatz von mobilen Tropfen können heterogene Proben somit verteilt und über größere Strecken (z. B. mehrere Meter) ohne Vermischung weitergeleitet werden. Auf diese Weise könnten derart separierte Proben zu einem nachfolgenden Syntheseschritt oder einer weiteren Analyse transportiert werden. Auch bei Suspensionen von Mikro-/Nanopartikeln können Tropfen mit definierten Mengen von Partikeln (Beads) erzeugt und an die gewünschten Reaktions- bzw. Analyseorte gefördert werden. Vorteil: Verbesserung der Reproduzierbarkeit von Analysen/Diagnostikprozeduren.

### Ausführungsbeispiel

Die Erfindung wird nachfolgend anhand eines in der Zeichnung dargestellten Ausführungsbeispiels näher erläutert.

Zwei Flüssigkeiten in den entsprechenden Eingangskanälen/-kapillaren treffen sich in einer Begegnungskammer 10 und erzeugen autonom eine Tropfenkette 12. In dem Beispiel sind, als nicht untereinander mischbare Flüssigkeiten, eine heterogene wässrige Lösung 14 und eine Öl/Lipid-Phase 16 dargestellt. Es können aber auch andere nicht mischbare Phasen verwendet werden.

Bei der heterogenen wässrigen Lösung 14 handelt es sich beispielsweise um einzelne hintereinander liegende Probenvolumina, die in einer Probenaufbearbeitungseinheit 18 erzeugt und strömungsmäßig hintereinander geschaltet werden. Diese heterogene wässrige Lösung soll nun zu einem relativ weit vom Entstehungsort entfernt angeordneten Ort transportiert werden, an dem sie weiter verarbeitet wird (beispielsweise analysiert, fraktioniert oder anderen Verarbeitungsschritten unterzogen wird). Diese Ort ist in der Zeichnung allgemein als Verarbeitungsort 20 dargestellt. Die Problematik besteht nun darin, dass die einzelnen Probenvolumina dann, wenn die heterogene wässrige Lösung über eine längere Strecke transportiert wird, untereinander vermischen können, wohingegen der Transport über eine relativ kurze Strecke (beispielsweise bis zu 1 cm) noch keine störenden Vermischungen verursacht. Daher wird ausgehend von der Einheit 18 die heterogene wässrige Lösung über einen kurzen Kanal 22 bis zur Begegnungskammer 10 transportiert. In diese Begegnungskammer 10 kommt über einen Kanal 24 die Öl/Lipid-Phase 16 hinzu.

In der Begegnungskammer 10 kommt es nun aufgrund der oben beschriebenen Mechanismen (siehe in diesem Zusammenhang auch die oben angegebenen Zitate) zu einer spontanen Phasentrennung der beiden Strömungen und damit zur Tropfenkette 12 in einem sich von der Begegnungskammer 10 aus erstreckenden Kanal 26. Diese Tropfenkette 12 besteht aus wechselweise hintereinander liegenden Teilvolumina der heterogenen wässrigen Lösung 14 und der Öl/Lipid-Phase 16. Die Aufteilung erfolgt in der Begegnungskammer 10 dergestalt, dass die einzelnen Probenvolumina der wässrigen Lösung 14 nunmehr durch Öl/Lipid-Phasen-Volumina voneinander getrennt sind. Damit kommt es jetzt im Kanal 26 nicht zu einer Vermischung der Probenvolumina.

Um die Probenvolumina nun in der Einheit 20 weiterverarbeiten zu können, bedarf es einer Wiedervereinigung der einzelnen Probenvolumina zu einem wiederum heterogenen wässrigen Lösungsstrom. Zu diesem Zweck erfolgt eine Auftrennung der Tropfenkette 12 in einer Auftrennkammer 28, in die der Kanal 26 einmündet. Über einen ersten Ausgangskanal 30 strömt dann die heterogene wässrige Lösung 14, bestehend aus den einzelnen unmittelbar hintereinander liegenden Probenvolumina, während aus einem zweiten Ausgangskanal 32 die Öl/Lipid-Phase 16 austritt. Dieser zweite Ausgangskanal 32 kann über eine Pumpe 34 mit dem ersten Kanal 24 zur Bildung eines Zirkulationssystems für die Öl/Lipid-Phase verbunden sein. In diesen Zirkulationskreislauf kann noch ein Reservoir 36 geschaltet sein. Die Pumpe (34) wird zum einen benötigt, um den Stoffkreislauf zu ermöglichen und zum anderen, um die Transportgeschwindigkeit zu regeln.

### Tropfenerzeugung (in Bewegungskammer 10)

Die Bildung kleinster Tropfen wird durch die Kombination von niedrigen Fliessgeschwindigkeiten (Größenordnung < 1 µl/min) und kleiner Volumina des Kreuzungspunktes (Größenordnungen einiger nl) erreicht. Bei höheren Flussraten (Größenordnung > 0,05 ml/min) nutzt man einen "Nozzle-Effekt" der bei der Einleitung von Öl/Lipid in die Strömung einer wässrigen Phase auftritt.
(i) Niedrige Flussraten:
   In einem T-Stück (Wandmaterial unbehandeltes Silizium; Kanalbreite 300 µm; Kanaltiefe 50 µm, Volumen der Begegnungskammer 5 nl) werden Wasser und Öl zusammengeführt, wie in der Zeichnung dargestellt. Wenn das Begegnungsvolumen mit einer der beiden Flüssigkeiten gefüllt wird und dann identische Flussraten beider Flüssigkeiten eingestellt werden, fließen Wasser und Öl abwechselnd in das Begegnungsvolumen, sofern die Flussraten unter 1 µl/min liegen. Im abfließenden Kanal lassen sich daher Ketten alternierender Tropfen der beiden Flüssigkeiten mit einem Tropfenvolumen von 100 nl beobachten. Skaliert man das Volumen der gebildeten Tropfen auf das Volumen der Begegnungskammer, lässt sich die Kanalbreite eines T-Stücks (Kanaltiefe wieder 50 µm), in dem Tropfen des Volumens von 500 pl erzeugt werden, auf etwa 5 µm reduzieren.
(ii) Hohe Flussraten:
   An ein Y-Stück (hydrophiles Wandmaterial, z.B. Glas; Leitungsdurchmesser 200 µm; Länge der Leitungen vom Kreuzungspunkt aus: 8 mm) werden über einen Siliconschlauch (hydrophob, Innendurchmesser 500 µm) Polyethylenschläuche (Innendurchmesser 400 µm) angeschlossen. Durch zwei der Schläuche werden Wasser und Öl in das Y-Stück überführt. Bei einer konstanten Flussrate des Wassers von 0.05 ml/min fließt Öl bei Flussraten oberhalb von 0.2 ml/min durch die Begegnungskammer, ohne die hydrophilen Glaswände des Y-Stücks zu berühren. Das Wasser fließt zwischen Öl und Glaswand in die

abführende Leitung. Die Bildung der Tropfen erfolgt an dem Übergang des Glas-Y-Stücks auf den Siliconschlauch durch einen "Nozzle-Effekt" und wird durch den Wechsel der Benetzungseigenschaften der Wände begünstigt. Die Wassertropfen haben ein Volumen von 90 nl, die Öltropfen bei einer Flussrate von 0.2 ml/min ein Volumen von 300 µl.

### Wiederauftrennung (in Auftrennkammer 28)

In ein T-Stück (eine der Ableitungen hat hydrophile, die gegenüberliegende hat hydrophobe Wände; Kanalbreite 10 µm, Kanaltiefe 50 µm; Volumen der Begegnungskammer 5 pl) wird eine Kette alternierender Tropfen von Wasser und Öl (Tropfenvolumen 1 nl) mit Flussraten unterhalb von 0.1 µl/min geleitet. Die Kette alternierender Tropfen wird in einen Öl- und einen Wasserstrom getrennt, die durch die hydrophobe bzw. die hydrophile Leitung abfließen.

### Transportsystem

Die beiden Systemkomponenten (Tropfenerzeugung/Wiederauftrennung) lassen sich, wie in der Zeichnung dargestellt, für den Transport heterogener Flüssigkeiten in einem geschlossenen System kombinieren. Bei vielen Analyseverfahren (z.B. Chromatographie) werden Proben aufgetrennt und heterogene Lösungen erzeugt, wie sie auch bei kinetischen Prozessen in Flussreaktoren entstehen. Die vorhandenen Konzentrationsgradienten am Ausgang des Messgeräts bzw. des Reaktors können mit dem beschriebenen Verfahren zur Tropfenbildung in kleinen Mikroprobenvolumina aufgetrennt werden und dann als Tropfenkette mischungsfrei über lange Strecken zur weiteren Verarbeitung transportiert werden. Dort oder nach dem Verarbeitungsschritt können die Tropfenketten wieder zusammengeführt bzw. in ihre Phasen aufgetrennt werden.

## Patentansprüche

1. Verfahren zum mischungsfreien Übertragen einer heterogenen Flüssigkeit in Mikrokanälen, bei dem
- eine erste heterogene Flüssigkeit (14) durch einen ersten Kanal (22) strömt und in einer Begegnungskammer (10) mit einem zweiten Kanal (24) mit einer durch diesen strömenden zweiten Flüssigkeit (16) zusammentrifft, wobei die beiden Flüssigkeiten (14,16) so gewählt werden, dass sie miteinander eine Phasentrennung bewirken,
- die erste und zweite Flüssigkeiten (14,16) in der Begegnungskammer (10) durch Bildung von Nicht-Gleichgewichtsphasen auf Grund von Oberflächenbelegung, Geometrie und/oder Füeßgeschwindigkeitseffekten in eine zweiphasige Strömung aus alternierend aufeinander folgenden Teilvolumina der ersten und der zweiten Flüssigkeit (14,16) umgesetzt werden und diese zweiphasige Strömung durch einen von der Begegnungskammer (10) des ersten Kanals (14) mit dem zweiten Kanal (24) ausgehenden Übertragungskanal (26) fließt, und
- die zweiphasige Strömung nach dieser Übertragung in einer Auftrennkammer (28) des Übertragungskanals (26) mit einem dritten und einem vierten Kanal (30,32) auf Grund von Oberflächenbelegungen, Geometrie und/oder Fließgeschwindigkeiten in die Flüssigkeitsströmungen vor der Auftrennung spontan in den dritten und vierten Kanal (30,32) aufgetrennt wird.

2. Verfahren nach Anspruch 1, **dadurch gekennzeichnet, dass** mindestens eine der heterogenen Flüssigkeiten Mikroteilchen, wie z. B. Beads aufweist.

3. Verwendung des Verfahrens nach Anspruch 1 oder 2 in der Chromatographie, insbesondere zur Protein-Reinigung, oder in anderen chemischen Trennverfahren.

4. Verwendung des Verfahrens nach Anspruch 1 oder 2 zum Transport von heterogenen Mikroteilchen-Verteilungen, insbesondere von Verteilungen von Beads, in mindestens einer der Flüssigkeiten.

## Claims

1. Method for mixing-free transport of a heterogeneous liquid in microchannels, wherein in the method
- a first heterogeneous liquid (14) flows through a first channel (22) and, in a first meeting chamber (10), meets a second channel (24) carrying a second liquid (16), wherein the two liquids (14,16) are selected such that they cooperate to cause a phase separation,
- the first and second liquids (14, 16), in the meeting chamber (10), are converted into a two-phase flow of alternating volume fractions of the first and second liquids (14, 16) by formation of non-equilibrium phases in particular due to surface coverage, geometries and/or flow velocities, and this two-phase flow passes through a transmission channel (26) extending from the meeting chamber (10) of the first channel (14) with the second channel (24), and
- the two-phase flow, after this transmission and in a separation chamber (28) of the transmission channel (26) with a third and a fourth channel (30,32), is spontaneously divided, in particular due to surface coverage, geometry and/or flow velocities, into the third and fourth channels (30,32) as the liquid flows that existed prior to the separation.

2. Method according to claim 1, **characterized in that** at least one of the heterogeneous liquids comprises microparticles, such as beads.

3. Application of the method according to claim 1 or 2 in chromatography, in particular for protein purification or other chemical separation processes.

4. Application of the method according to claim 1 or 2 for transporting heterogeneous microparticles, in particular beads, distributed in at least one of the liquids.

## Revendications

1. Procédé de transfert sans mélange d'un liquide hétérogène dans des microcanaux, dans lequel
- un premier liquide hétérogène (14) s'écoule à travers un premier canal (22) et rencontre un deuxième liquide (16) dans une chambre de rencontre (10) comprenant un deuxième canal (24) à travers lequel s'écoule ledit deuxième liquide, les deux liquides (14, 16) étant choisis de sorte qu'ensemble, ils effectuent une séparation de phases,
- dans la chambre de rencontre (10), lesdits premier et deuxième liquides (14, 16) sont transformés, par formation de phases hors équilibre, à cause du recouvrement superficiel, de la géométrie et/ou des effets de vitesse d'écoulement, en un flux à deux phases formé par des volumes partielles alternantes successives du premier et du deuxième liquide (14, 16), et cette flux à deux phases s'écoule à travers un canal de transfert (26) partant de ladite chambre de rencontre (10) dudit premier canal (14) avec ledit deuxième canal (24), et
- après ce transfert, ledit flux à deux phases est séparé dans une chambre de séparation (28) dudit canal de transfert (26) avec un troisième et un quatrième canal (30, 32), ledit flux étant séparé spontanément, à cause du recouvrement superficiel, de la géométrie et/ou des effets de vitesse d'écoulement, en les flux de liquide existant avant la séparation s'écoulant dans le troisième et le quatrième canal (30, 32).

2. Procédé selon la revendication 1, **caractérisé en ce qu'**au moins un des liquides hétérogènes comprend des microparticules, comme des perles, par exemple.

3. Utilisation du procédé selon les revendications 1 ou 2 dans la chromatographie, notamment pour la purification de protéines, ou dans autres procédés de séparation chimiques.

4. Utilisation du procédé selon les revendications 1 ou 2 pour le transport de dispersions de microparticules hétérogènes, notamment de dispersions de perles, dans au moins un des liquides.
